# EUROPEAN PATENT APPLICATION

(11) **EP 1 932 612 A1**
(43) Date of publication of application: **18.06.2008**
(21) Application number: 07116052.7
(22) Date of filing: 10.09.2007
(51) Int. Cl.: B23K 9/133, B21C 47/28, B65H 49/38

(54) **Pail-pack for welding wire**

(30) Priority: 13.12.2006 KR 20060127131
(71) Applicant: Kiswel Ltd., Sasang-gu, Busan 617-843 (KR)
(72) Inventor: Lee, Jae Hyoung, Changwon-si, Gyeongnam (KR)
(74) Representative: Beck, Michael Rudolf

(57) **Abstract**

Provided is a pail-pack for welding wire including: an outer cylinder (10) forming a main body; a bottom plate (20) provided inside a lower end of the outer cylinder (10) and having a support part (22) that is bent downward from an edge of the bottom plate (20) to contact an inner circumferential surface of the lower end of the outer cylinder (10); and a polygonal tube (30) inscribed in the outer cylinder (10) and having a polygonal cross-section containing a welding wire winding layer therein. Accordingly, the pail-pack for welding wire is easy to recycle and carry and has increased strength.

## Description

### CROSS-REFERENCE TO RELATED APPLICATION

This application claims the benefit of Korean Patent Application No. 2006-127131, filed on December 13, 2006, which is hereby incorporated by reference as if fully set forth herein.

### BACKGROUND OF THE INVENTION

### 1. Field of the Invention

The present invention relates to a pail-pack for welding wire, and more particularly, to a pail-pack for welding wire which is easy to recycle and carry and has increased strength.

### 2. Discussion of Related Art

In general, methods of winding welding wire used for automatic and semiautomatic welding apparatuses may be classified into a spool winding method and a pail-pack winding method.

In the case of the pail-pack winding method, welding wire is wound in a pail-pack container. Here, the structure of the pail-pack container may be largely divided into a single cylindrical structure having only an outer cylinder and a double cylindrical structure having outer and inner cylinders.

In the pail-pack winding method, since a large amount of welding wire is kept in a wound state, it is necessary to efficiently feed the welding wire. The pail-pack winding method is mainly employed in long-duration welding operations because a large amount of welding wire can be wound.

Since a pail-pack for welding wire may improve the efficiency of a long-duration welding operation or a step-by-step welding operation, it is widely used.

However, the foregoing conventional pail-pack for welding wire has the following problems.

First, while welding wire is being withdrawn from a conventional pail-pack for welding wire, the welding wire may become kinked and tangled. Thus, the conventional pail-pack for welding wire is provided with a pressure plate that applies pressure to the top of the wound welding wire in order to efficiently feed the welding wire without kinks and tangles.

However, a space is formed between an outer cylinder in which the welding wire is contained and the pressure plate, so it is difficult to bind a portion of the welding wire that is withdrawn to the outside of the pressure plate. In order to solve this problem, an additional component is required, thereby complicating the structure of the pail-pack and increasing production cost.

Second, since the outer cylinder of the conventional pail-pack is formed of paper, the pail-pack is not strong enough to hold a load of more than 300kg of welding wire. In order to increase the strength of the outer cylinder, a bottom plate of the outer cylinder may be formed of steel or a plurality of portions of the outer cylinder may be reinforced with frame bolts formed of steel. In this case, however, it is troublesome to separate a frame formed of steel from a main body formed of paper in order to recycle the materials.

Third, when the paper is destroyed by fire, an adhesive used to adhere the paper to the pail-pack bums and generates poisonous gases which may pollute the air and may harm workers.

### SUMMARY OF THE INVENTION

The present invention is directed to a pail-pack for welding wire which is easy to recycle and carry and has increased strength.

According to an aspect of the invention, a pail-pack for welding wire comprises: an outer cylinder forming a main body; a bottom plate provided inside a lower end of the outer cylinder and having a support part that is bent downward from an edge of the bottom plate to contact an inner circumferential surface of the lower end of the outer cylinder; and a polygonal tube inscribed in the outer cylinder and having a polygonal cross-section containing a welding wire winding layer therein.

A pressure plate may be provided on the welding wire winding layer. The pressure plate may have a shape corresponding to an inner cross-section of the polygonal tube.

A pressure part having the shape of a hollow circular plate may be provided on the welding wire winding layer. Also, a spring-loaded protrusion part may radially protrude from an outer peripheral edge of the pressure part to correspond to each corner of the polygonal tube.

A hanging band may comprise: two ends having hanging parts and exposed through both sides of the outer cylinder; and a central portion enclosing a bottom surface of the bottom plate through openings formed on both sides of the bottom plate.

The openings may be formed in portions in which the support parts are bent to face each other from opposite sides of the bottom plate to correspond to the width and thickness of the hanging band.

The central portion of the hanging band may be combined with a bolt member and a nut member, which are provided through the center of the bottom plate, and fixed to the bottom plate. The hanging band may be formed of polypropylene.

A support member may be provided in a lengthwise direction of the polygonal tube between the outer cylinder and the polygonal tube, and have one side contacting an inner surface of the outer cylinder and the other side contacting an outer surface of each side of the polygonal tube to form a support structure.

The support member may have a cylindrical cross-section.

A bottom reinforcing plate may be further provided between a top surface of the bottom plate and a lower portion of the polygonal tube. The bottom reinforcing plate may have a shape corresponding to an inner cross-section of the outer cylinder.

Also, an internal reinforcing member may be further provided and closely adhered to an inner circumferential surface of the support part.

The outer cylinder, the bottom plate, the polygonal tube, and the support member may be formed of a paper material that is obtained by compressing multifold paper layers using a press processing technique.

A moisture-proof bag formed of vinyl may be provided between the outer cylinder and the polygonal tube to enclose the polygonal tube.

### BRIEF DESCRIPTION OF THE DRAWINGS

The above and other objects, features and advantages of the present invention will become more apparent to those of ordinary skill in the art by describing in detail exemplary embodiments thereof with reference to the attached drawings in which:
Fig. 1 is an exploded perspective view of a pail-pack for welding wire according to an exemplary embodiment of the present invention;
Fig. 2 is a partially cutaway perspective view of the pail-pack for welding wire shown in Fig. 1;
Figs. 3 and 4 are plan views of the pail-pack for welding wire shown in Fig. 1;
Fig. 5 is a cross-sectional view of the pail-pack for welding wire shown in Fig. 1;
Fig. 6 is a rear side view of the pail-pack for welding wire shown in Fig. 1;
Fig. 7 is a perspective view of a bottom plate of the pail-pack for welding wire shown in Fig. 1; and
Fig. 8 is a cross-sectional view of a pail-pack for welding wire according to another exemplary embodiment of the present invention.

### DETAILED DESCRIPTION OF EXEMPLARY EMBODIMENTS

Hereinafter, exemplary embodiments of the present invention will be described in detail with reference to the accompanying drawings, in which like reference numerals refer to like elements.

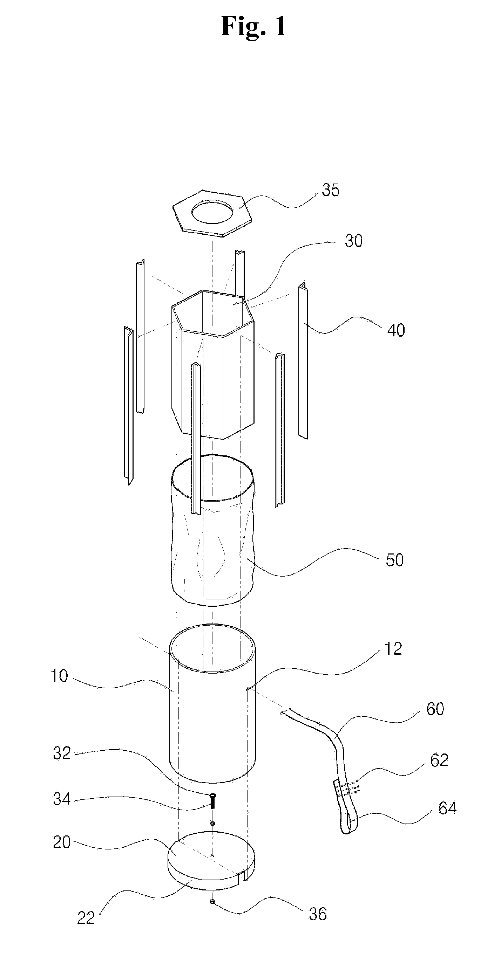

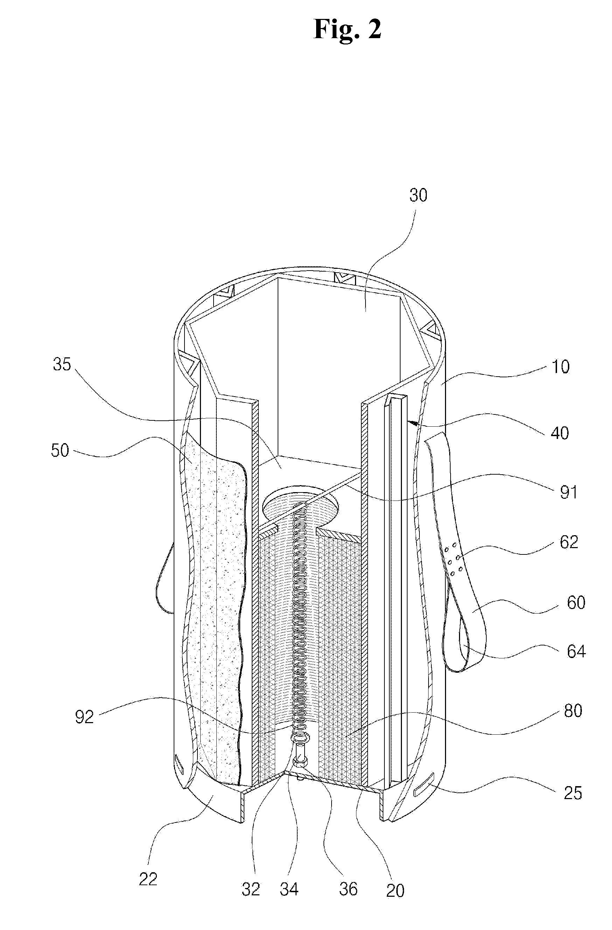

Figs. 1 and 2 are an exploded perspective view and a partially cutaway perspective view of a pail-pack for welding wire according to an exemplary embodiment of the present invention, respectively.

Referring to Figs. 1 and 2, the pail-pack for welding wire may include an outer cylinder 10, a bottom plate 20, a polygonal tube 30, and a support member 40.

The bottom plate 20 is provided in a lower end of the outer cylinder 10, and the polygonal tube 30 having a polygonal section is inside the outer cylinder 10 such that a welding wire winding layer 80 is contained in the polygonal tube 30.

The support member 40 is provided between the polygonal tube 30 and the outer cylinder 10 and supports the polygonal tube 30.

Specifically, the outer cylinder 10 may have a cylindrical shape. The bottom plate 20 may be provided inside the lower end of the outer cylinder 10, and an edge of the bottom plate 20 may be bent downward to function as a support part 22.

In this case, the support part 22 is closely adhered to and combined with an inner circumferential surface of the lower end of the outer cylinder 10, and thus the support part 22 and the lower end of the outer cylinder 10 are both in contact with the ground.

The support part 22 forms a space where the outer cylinder 10 is combined with the bottom plate 20 and stably supports a lower portion of the bottom plate 20.

In other words, the support part 22 increases resistance to bending and tensile stress applied to an outer peripheral edge of the bottom plate 20, thereby structurally reinforcing the strength of a lower support structure of the bottom plate 20.

Accordingly, it is possible to stably maintain the supporting state even when the heavy welding wire winding layer 80 is disposed on the lower plate.

Here, a portion of the support part 22 which contacts the lower end of the outer cylinder 10 may be fixed by a plurality of stapler pins 25 which are connected by a stapler at intervals of a predetermined angle in a circumferential direction.

As an alternative to the stapler pins 25, the support part 22 may be combined with the lower end of the outer cylinder 10 by a string sewed in the circumferential direction.

Meanwhile, the polygonal tube 30 having a polygonal section may be provided inside the outer cylinder 10. The polygonal tube 30 may have the same length as the outer cylinder 10. Also, an inner cylinder (not shown) may be selectively provided in the center of the inside of the polygonal tube 30.

An outer surface of the polygonal tube 30 may contact an inner circumferential surface of the outer cylinder 10, and a lower end of the polygonal tube 30 may contact an upper surface of the bottom plate 20.

Also, the welding wire winding layer 80 in which welding wire is stacked in a wound state is contained in the polygonal tube 30.

Also, the support member 40 may be provided between the outer surface of each side of the polygonal tube 30 and an inner surface of the outer cylinder 10 to support each side of the polygonal tube 30.

The support member 40 may have the same length as the polygonal tube 30.

The outer cylinder 10, the bottom plate 20, the polygonal tube 30, and the support member 40 may be formed of a paper material obtained by compressing multifold paper layers by means of a press processing technique using a mold, thereby making the pail-pack easier to recycle.

A bolt member 34 may be connected through the center of the bottom plate 20, and a fixing ring 32 may be provided at an upper end of the bolt member 34.

A nut member 36 may be combined with each of the inner and outer surfaces of the bottom plate 20. The nut member 36 may be combined with the bolt member 34 to fix the bolt member 34.

A pressure plate 35 may be provide on the welding wire winding layer 80 to apply pressure to the welding wire winding layer 80, and a mounting bracket 91 may be provided on the pressure plate 35.

Here, the mounting bracket 91 may be provided across the pressure plate 35 to contact a top surface of the pressure plate 35.

Also, both ends of the mounting bracket 92 may be located in corners of the polygonal tube 30, so that the mounting bracket 91 can contact an inner surface of the polygonal tube 30, thereby preventing rotation of the mounting bracket 91.

One end of a spring 92 is connected to the fixing ring 32, and the other end of the spring 92 is connected to the mounting bracket 91. The spring 92 pulls the pressure plate 35 downward.

Thus, the pressure plate 35 can continuously apply downward pressure to the welding wire winding layer 80 so that the welding wire winding layer 80 can be stably maintained in a fixed state.

Here, the other end of the spring 92 can be connected to the mounting bracket 80 using various methods.

Also, the mounting bracket 91 is not limited to any specific shape and may have various cross-sections, for example, a plate shape, a rod shape, or a square shape. Thus, the spring 92 may be replaced by an elastic string.

Meanwhile, a moisture-proof bag 50 may be provided between the outer cylinder 10 and the polygonal tube 30 to enclose the polygonal tube 30. The moisture-proof bag 50 may be formed of vinyl not to allow moisture to pass therethrough.

The moisture-proof bag 50, which functions to protect the welding wire contained in the polygonal tube 30 from moisture, may enclose a lower portion of the polygonal tube 30 between each of the support members 40 and the polygonal tube 30.

Further, although the moisture-proof bag 50 may be provided between each of the support members 40 and the polygonal tube 30, it may be selectively provided between each of the support members 40 and the outer cylinder 10.

Also, a hanging band 60 may be provided at an upper portion of the outer cylinder 10 to carry the pail-pack for welding wire.

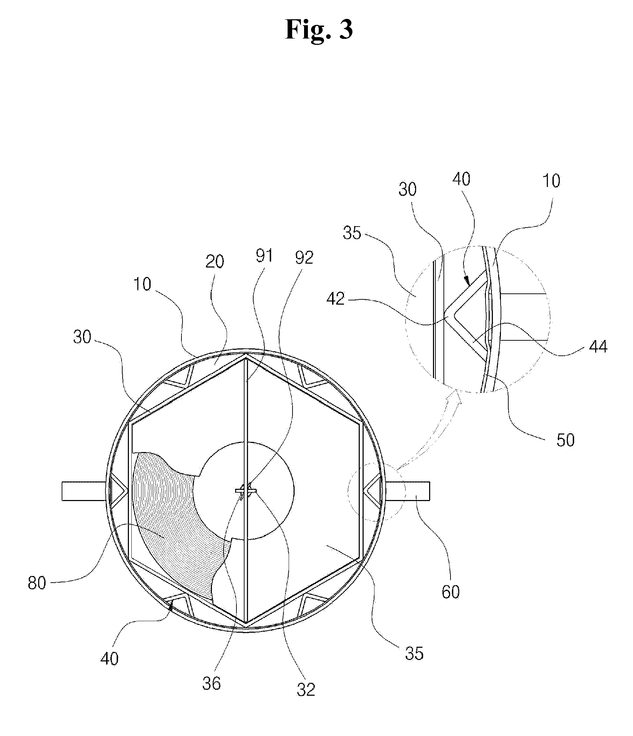

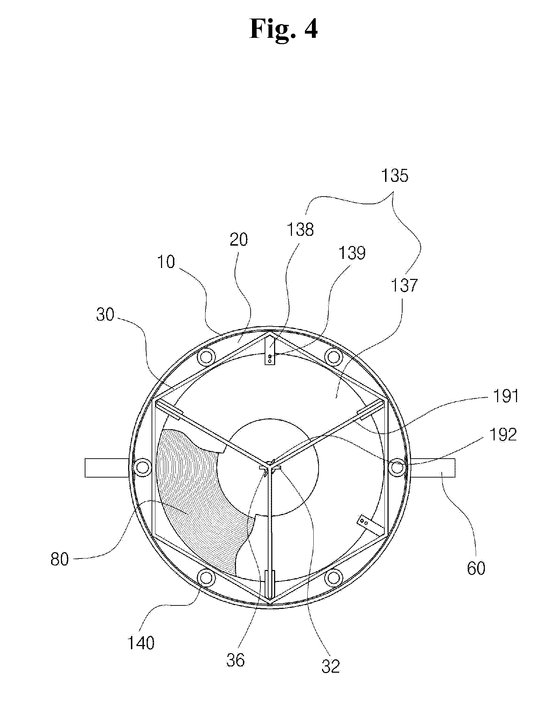

Figs. 3 and 4 are plan views of the pail-pack for welding wire shown in Fig. 1.

Referring to Fig. 3, the support member 40 may have a cross-section that is bent in a lengthwise direction thereof.

The bent cross-section of the support member 40 may include a bent part 42 which corresponds to a central portion of the support member 40, and extension parts 44 which extend the same length from the bent part 42 on both sides thereof.

Also, the bent part 42 may contact the center of the polygonal tube 30, and the extension parts 44 may contact the inner circumferential surface of the outer cylinder 10.

The bent part 42 may be formed to have various radii of curvature.

Thus, external force applied to the center of each side of the polygonal tube 30 while the welding wire is wound in the polygonal tube 30, and external force continuously applied to the center of each side of the polygonal tube 30 about which the welding wire winding layer 80 is circumscribed, can be counterbalanced by support force applied by the bent part 42.

Thus, each side of the polygonal tube 30 can be prevented from being bent outward.

Also, since the support member 40 has a bent cross-section, support strength required to support each side of the polygonal tube 30 can be further reinforced.

Furthermore, the support member 40 is provided such that the bent part 42 contacts the center of each side of the polygonal tube 30 and the extension parts 44 contact the inner surface of the outer cylinder 10.

Therefore, the support member 40 is located in the center of a space formed between the outer surface of each side of the polygonal tube 30 and the inner surface of the outer cylinder 10.

Also, even if the support member 40 is not adhered using an adhesive, it may be fixed rather than movable and rotatable. Without the adhesive, it is easy to recycle the pail-pack for welding wire and prevent the generation of poisonous gases from the adhesive in a burn-up process.

Meanwhile, the polygonal tube 30 may have at least one of a hexagonal cross-section and an octagonal cross-section in order to increase the inner area of the polygonal tube 30 and permit the support member 40 to have an appropriate size. As a result, a larger amount of welding wire can be contained in the polygonal tube 30 and the support member 40 can perform its function sufficiently.

In this case, the polygonal tube 30 may have a hexagonal cross-section.

Also, the pressure plate 35 is provided on the welding wire winding layer 80 to apply pressure to the welding wire winding layer 35.

The pressure plate 35 may have an outer portion whose shape corresponds to an inner cross-section of the polygonal tube 30, so that the pressure plate 35 cannot rotate in the polygonal tube 30.

In this construction, the pail-pack for welding wire can be structurally simplified and made lightweight because no additional component for preventing rotation of the pressure plate 35 is required.

Also, even if a portion of the welding wire withdrawn from the welding wire winding layer 80 protrudes to the outside of the pressure plate 35, the portion of the welding wire is bound by respective surfaces of the polygonal tube 30 that form a predetermined angle.

Therefore, further protrusion of the withdrawn welding wire outside of the pressure plate 35 can be prevented.

Referring to Fig. 4, a support member 140 may have a cylindrical cross-section.

One side of the support member 140 may contact the inner surface of the outer cylinder 10, and the other side of the support member 140 may contact the outer surface of the polygonal tube 30.

In this case, the other side of the support member 140 may contact the center of the outer surface of the polygonal tube 30.

Thus, external force applied to the center of each side of the polygonal tube 30 while the welding wire is being wound in the polygonal tube 30, and external force continuously applied to the center of each side of the polygonal tube 30 about which the welding wire winding layer 80 is circumscribed, can be counterbalanced by support force applied by the bent part 42.

Thus, each side of the polygonal tube 30 can be prevented from being bent outward.

Meanwhile, a pressure plate 135 may be provided on the welding wire winding layer 80. The pressure plate 135 may include a pressure part 137 having the form of a hollow circular plate, and a spring-loaded protrusion part 138 protruding from an outer peripheral edge of the pressure part 137.

In this case, the spring-loaded protrusion part 138 may radially protrude from the outer peripheral edge of the pressure part 137 to contact each corner of the polygonal tube 30.

Also, each end of the spring-loaded protrusion part 138 may have a shape corresponding to an angle formed by the respective surfaces of the polygonal tube 30. Also, each end of the spring-loaded protrusion part 138 may contact a predetermined length of the inner surface of the polygonal tube 30.

In this construction, the spring-loaded protrusion part 138 is closely bound by each corner of the polygonal tube 30 and cannot be rotated in the polygonal tube 30.

Also, the spring-loaded protrusion part 138 may be combined with the pressure part 137 by a joint member 139 such as a bolt or adhesive.

Meanwhile, a mounting bracket 191 provided on the pressure plate 135 may include extension parts which form a predetermined angle with one another and extend from the center in three directions.

In this case, an end of each of the extension parts may be located in a corner of the polygonal tube 30, thereby preventing rotation of the mounting bracket 191.

Also, a spring 192 is connected to the mounting bracket 191 and the fixing ring 32 and permits the mounting bracket 191 to apply downward pressure to the pressure plate 135.

In this case, the mounting bracket 191 may include extension parts that extend in three or more directions, and the spring 92 may be replaced by an elastic member such as an elastic string.

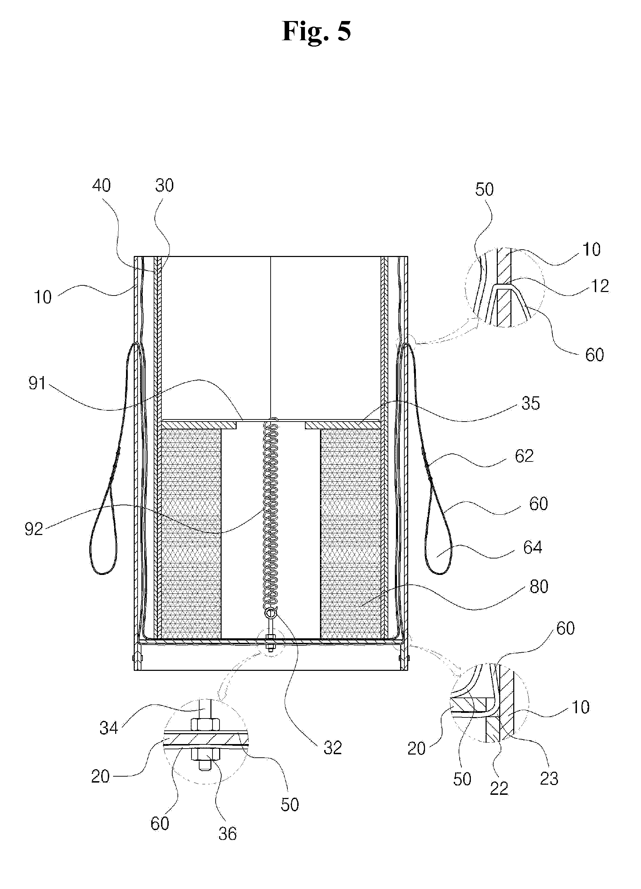

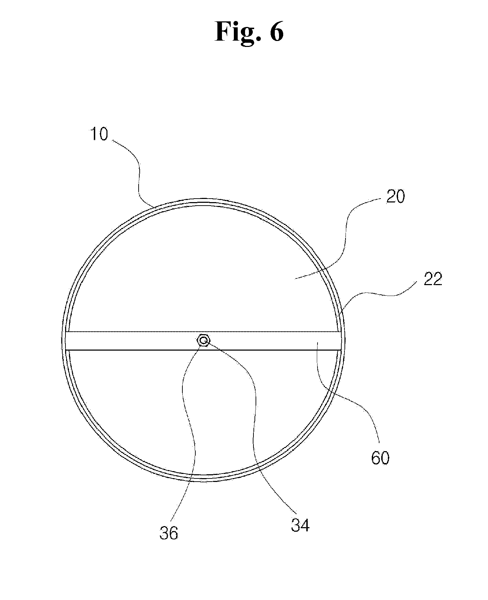

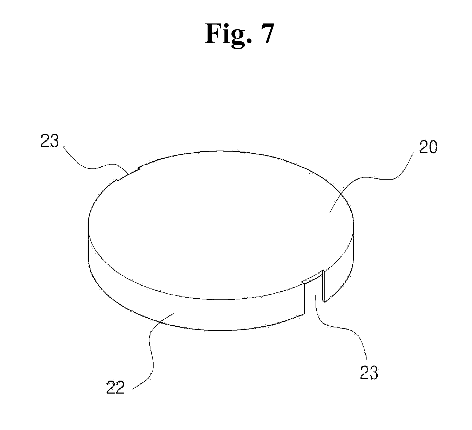

Figs. 5, 6, and 7 are a cross-sectional view, a rear side view, and a perspective view of the pail-pack for welding wire shown in Fig. 1, respectively.

Referring to Figs. 5 through 7, penetration parts 12 may be formed through an upper portion of the outer cylinder 10 to face each other. The penetration parts 12 may be formed to a width corresponding to the thickness of the hanging band 60.

Also, openings 23 may be formed in portions in which the support part 22 is bent on both sides of the bottom plate 20 provided at a lower end of the outer cylinder 10 to face each other from opposite sides of the bottom plate 20. The openings 23 may be cut to a width corresponding to the thickness of the hanging band 60.

Also, the bottom plate 20 may be combined with the outer cylinder 10 such that each of the openings 23 is located below the penetration part 12 in a vertical direction.

Therefore, the hanging band 60 is brought from the outside of the outer cylinder 10 into the outer cylinder 10 through any one of the penetration parts 12, extends downward in a vertical direction, and is drawn to the outside of the bottom plate 20 through one of the openings 23.

As described above, the drawn hanging band 60 encloses the bottom plate 20 and is brought into the outer cylinder 10 again through another opening 23 formed opposite to the first opening 23.

Thereafter, the hanging band 60 extends upward and is drawn out of the outer cylinder 10 through another penetration part 12 formed in one side of the outer cylinder 10.

As described above, the hanging band 60 is provided in a vertical direction to enclose the center of the bottom plate 20, so that the pail-pack for welding wire does not lean to one side and can be stably carried.

Meanwhile, a portion of the hanging band 60 brought in the outer cylinder 10 may be provided outside the moisture-proof bag 50 to prevent damage to the moisture-proof bag 50.

Also, the center of a portion of the hanging band 60 that is drawn out of the bottom plate 20 and contacts the outer surface of the bottom plate 20 in the diametrical direction of the bottom plate 20 may be fixedly combined with the bolt member 34 and the nut member 36.

Also, both ends of the hanging band 60, which are drawn out through the penetration parts 12, are each folded and combined with a connecting portion 62 such as a rivet or a string to form a handle-type hanging part 64.

In this case, a transfer apparatus for transferring the pail-pack for welding wire may be combined with the hanging part 64.

Thus, when the hanging band 60 is lifted by the transfer apparatus combined with the hanging part 64, the pail-pack for welding wire is also lifted up.

In this case, a central portion of the hanging band 60 protrudes outside of the bottom plate 20 and fixedly contacts the bottom plate 20 in the diametrical direction of the bottom plate 20, thereby facilitating transfer of the pail-pack for welding wire.

Also, the hanging band 60 may be formed of the same material as automobile seat belts having enough strength to transfer the pail-pack for welding wire. For example, the hanging band 60 may be formed of nylon, polyester, or polypropylene.

Further, the hanging band 60 may be webbed to increase tensile force.

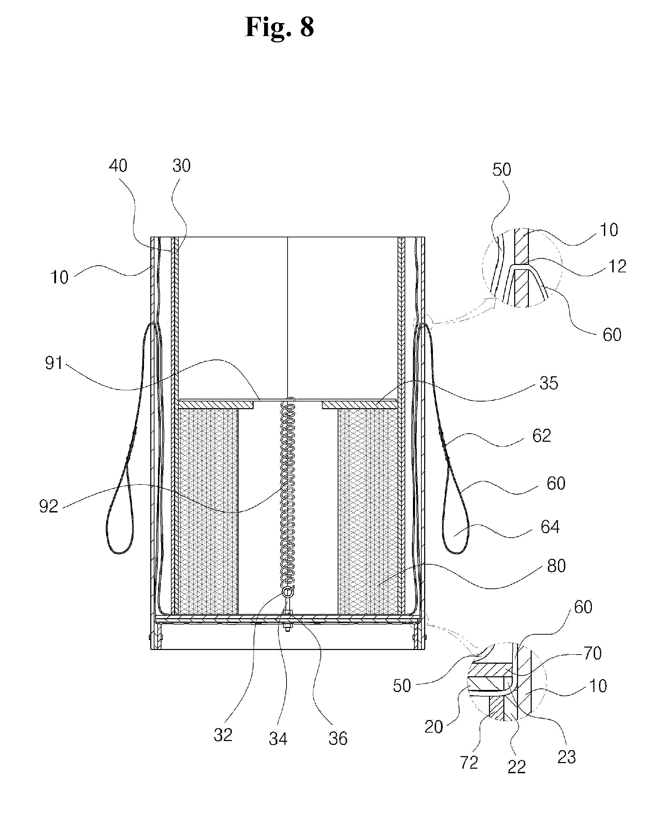

Fig. 8 is a cross-sectional view of a pail-pack for welding wire according to another exemplary embodiment of the present invention.

The pail-pack for welding wire according to another exemplary embodiment of the present invention has the same construction as the pail-pack for welding wire according to the previous exemplary embodiment except that a bottom reinforcing plate 70 and an internal reinforcing member 72 are further provided. Thus, a description of the same components as in the previous exemplary embodiment will be omitted here.

Referring to Fig. 8, the bottom reinforcing plate 70 may be provided on a top surface of a bottom plate 10. The bottom reinforcing plate 70 may have a shape corresponding to an inner cross-section of an outer cylinder 10.

Thus, the bottom reinforcing plate 70 may reinforce the strength of the bottom plate 10 and protect the bottom plate 10 from the load of the welding wire winding layer 80.

The bottom reinforcing plate 70 may be provided on the moisture-proof bag 50 located on the bottom plate 20 or provided between the bottom plate 20 and the moisture-proof bag 50.

Also, grooves (not shown) corresponding to the thickness and width of the hanging band 60 may be formed on both sides of the bottom reinforcing plate 70 such that the hanging band 60 can be smoothly brought into the outer cylinder 10.

Meanwhile, the internal reinforcing member 72 may be further provided and closely adhered to an inner circumferential surface of the support part 22 of the bottom plate 20. The internal reinforcing member 72 can prevent the support part 22 from being internally bent due to an excessive load applied to the bottom plate 20.

One or both of the bottom reinforcing plate 70 and the internal reinforcing member 72 may be selectively provided.

Also, the bottom reinforcing plate 70 and the internal reinforcing member 72 may be formed of a paper material obtained by compressing multifold paper layers by means of a press processing technique using a mold, thereby making the pail-pack for welding wire easier to recycle.

As explained thus far, a pail-pack for welding wire according to the present invention has the following effects.

First, an outer cylinder, a bottom plate, a polygonal tube, and a support member may be formed of a paper material obtained by compressing multifold paper layers by means of a press processing technique using a mold, thereby reinforcing the strength and making the pail-pack for welding wire easier to recycle.

Second, a central portion of a hanging band is provided through openings formed on both sides of the bottom plate to enclose an outer bottom surface of the bottom plate, so that the pail-pack for welding wire can be stably carried.

Third, since the polygonal tube has a polygonal cross-section, even if a portion of the welding wire withdrawn from a welding wire winding layer protrudes outside of the pressure plate, the portion of the welding wire is bound by the respective surfaces of the polygonal tube that form a predetermined angle, thereby preventing the welding wire from being further withdrawn.

Fourth, one side of the pressure plate contacts and is bound by the inner surface of the polygonal tube, thereby preventing rotation and facilitating vertical movement of the pressure plate without an additional guide apparatus.

Fifth, since no additional guide apparatus is required, process simplicity and productivity can be improved.

While the invention has been shown and described with reference to certain exemplary embodiments thereof, it will be understood by those skilled in the art that various changes in form and details may be made therein without departing from the spirit and scope of the invention as defined by the appended claims.

## Claims

1. A pail-pack for welding wire, comprising:
an outer cylinder forming a main body;
a bottom plate provided inside a lower end of the outer cylinder and having a support part that is bent downward from an edge of the bottom plate to contact an inner circumferential surface of the lower end of the outer cylinder; and
a polygonal tube inscribed in the outer cylinder and having a polygonal cross-section containing a welding wire winding layer therein.

2. The pail-pack for welding wire according to claim 1, further comprising a pressure plate provided on the welding wire winding layer and having a shape corresponding to an inner cross-section of the polygonal tube.

3. The pail-pack for welding wire according to claim 1, further comprising a pressure part provided on the welding wire winding layer and having the shape of a hollow circular plate; and a spring-loaded protrusion part radially protruding from an outer peripheral edge of the pressure part to correspond to each corner of the polygonal tube.

4. The pail-pack for welding wire according to claim 1, further comprising a hanging band including: two ends having hanging parts and exposed through both sides of the outer cylinder; and a central portion enclosing a bottom surface of the bottom plate through openings formed on both sides of the bottom plate.

5. The pail-pack for welding wire according to claim 4, wherein the openings are formed in portions in which the support parts are bent to face each other from opposite sides of the bottom plate to correspond to the width and thickness of the hanging band.

6. The pail-pack for welding wire according to claim 4, wherein the central portion of the hanging band is combined with a bolt member and a nut member provided through the center of the bottom plate and fixed to the bottom plate.

7. The pail-pack for welding wire according to claim 4, wherein the hanging band is formed of polypropylene.

8. The pail-pack for welding wire according to claim 1, wherein a support member is provided in a lengthwise direction of the polygonal tube between the outer cylinder and the polygonal tube, and has one side contacting an inner surface of the outer cylinder and the other side contacting an outer surface of each side of the polygonal tube to form a support structure.

9. The pail-pack for welding wire according to claim 8, wherein the support member has a cylindrical cross-section.

10. The pail-pack for welding wire according to claim 1, further comprising a bottom reinforcing plate provided between a top surface of the bottom plate and a lower portion of the polygonal tube and having a shape corresponding to an inner cross-section of the outer cylinder.

11. The pail-pack for welding wire according to claim 1, further comprising an internal reinforcing member closely adhered to an inner circumferential surface of the support part.

12. The pail-pack for welding wire according to claim 1 or 8, wherein the outer cylinder, the bottom plate, the polygonal tube, and the support member are formed of a paper material that is obtained by compressing multifold paper layers using a press processing technique.

13. The pail-pack for welding wire according to claim 1, wherein a moisture-proof bag is formed of vinyl and provided between the outer cylinder and the polygonal tube to enclose the polygonal tube.
